# EUROPEAN PATENT APPLICATION

(11) **EP 1 061 053 A1**
(43) Date of publication of application: **20.12.2000**
(21) Application number: 99961355.7
(22) Date of filing: 24.12.1999
(51) Int. Cl.: C03B 37/00, C03C 13/06, B09B 3/00

(54) **ROCK WOOL USING AS RAW MATERIAL GRANULATED MUNICIPAL WASTE INCINERATION ASH AND PRODUCTION METHOD THEREOF**

(30) Priority: 04.01.1999 JP 7099
(71) Applicant: NITTO BOSEKI CO., LTD., Fukushima-shi, Fukushima 960-8161 (JP)
(72) Inventor: NAKAJIMA, Hideo, Inba-gun Chiba 286-0205 (JP); YAMASAWA, Atushi, Chiba-shi Chiba 263-0024 (JP); KOGI, Yasushi, Yotsukaido-shi Chiba 284-0006 (JP)
(74) Representative: HOFFMANN - EITLE
(86) International application number: JP9907262
(87) International publication number: WO0040517

(57) **Abstract**

As recycling use of a waste matter, rock wool is produced by granulating municipal refuse incinerated ash, which cannot be used easily in the powdery form, by a granulator, thereby forming a low-cost solid raw material in the massive form; charging it with adjusting raw materials in a welting furnace; melting the resulting mixture; and fiberizing the molten.

## Description

### Technical Field

This invention relates to recycling of municipal refuse incinerated ash, effective utilization of which has been eagerly requested from the viewpoints of environmental protection and resource recycling. This invention provides rock wool, for use as various reinforcing fibers such as thermal insulating material and sound absorbing material, suited for low-cost production by using municipal refuse incinerated ash in the granulated form as a raw material; and the manufacturing process thereof.

### Background Art

Rock wool has conventionally been produced mainly by either of two processes, one process comprising charging in a cupola, a raw material mixture obtained by adding, to a massive blast furnace slag or natural stones, a material to adjust the composition of rock wool, melting the mixture by using coke as a main heat source and fiberizing the resulting molten mixture; and the other process, a direct process, comprising hot charging the molten slag, which has been formed in a blast furnace, into an electric furnace, fusing and adjusting it and then fiberizing the molten substance. In recent years, as the social demands, incinerated ash which is one of non-industrial wastes generated in an amount exceeding 6 million tons/year has been disposed mainly on a reclaimed site or the like, though some are used for cements or ceramics such as fire-proofing material or light-weight aggregate, or used or tried as a road-bed material, a concrete aggregate or blocks after formed into a molten slag.

As an attempt to make use of incinerated ash as a raw material for the production of rock wool, a process for producing rook wool or its equivalent by melting industrial waste water sludge and industrial waste incinerated ash is described in JP-A-53-94460 (the term "JP-A" as used herein means an "unexamined published Japanese patent application), while a process for properly controlling the thickness of incinerated ash layer in an electric furnace for fusing incinerated ash is described in JP-A-5-329463. In JP-A-6-92750, described is a process for producing slag wool by charging a raw material mixture containing dried sludge or incinerated ash of sludge in a cupola, fusing the mixture and fiberizing the resulting molten sludge slag in the liquid form. It is substantially impossible to produce rock wool by directly using municipal refuse incinerated ash as a recycled raw material, because bulk density of the incinerated ash itself is too low to be charged in a melting furnace and particularly when it is charged in a cupola, it causes a large amount of dust vigorously by the exhaust gas and in addition, the powder passes through the cupola without melting. As described in JP-A-10-273332, a molten slag of municipal refuse incinerated ash can be produced by fusing the ash in an electric furnace, followed by fiberization. This process has already been industrialized, but it is accompanied with such a problem as the high production cost. Equipment investment amounting even to 1000 millions of yen is necessary only for the equipment exclusively used for fusing municipal refuse incinerated ash into a slag. In addition, the energy cost for providing fusing temperature as high as 1300 to 1550°C for the formation of molten slag is required. It is already known that 3 to 70000 yen/ton is necessary as the production cost.

Upon the production of rock wool by using municipal refuse incinerated ash as a raw material, charging the raw material with the powdery form into a cupola causes blowing-up of a large amount of incinerated ash and scattering of it into an exhaust duct or treating apparatus as a dust, thereby filling therewith the duct or dust-collecting box and terminating its function. With the foregoing in view, the present invention has been completed. An object of the present invention is therefore to obtain desired rock wool by processing municipal refuse incinerated ash, which has small bulk density and light in weight, at a low cost, and fusing the resulting raw material effectively at a low cost; and a production process thereof.

### Disclosure of the Invention

With a view toward overcoming those above-described problems, the present inventors have found that rock wool is available by granulating municipal refuse incinerated ash in the powdery form, thereby obtaining a massive solid raw material at a low cost, fusing the resulting granulated raw material and fiberizing the molten material. In the present invention, it is not necessary to use the municipal refuse incinerated ash, which has so far been unusable in the powdery form because of a small bulk density and lightweight, after formation into a molten slag at a high cost and re-fusing in a melting furnace. The present invention makes it possible to use it as a raw material of rock wool after adding thereto water and binder agent, to granulate the resulting mixture directly and then drying. The granulated municipal refuse incinerated ash is preferably used in an amount ranging from 50 to 90 wt.% in order to reduce the production cost and effectively increase the using amount of it as a raw material. To it, an adjusting raw material such as iron steel slag, limestone, silica stone or shot waste by-produced upon rock wool production is preferably added. The present inventors have also found that a cupola is preferred as a furnace for efficiently fusing the granulated raw material from the cost-wise viewpoint; and that when the granulated raw material has an average diameter of 20 to 50 mm, the efficient molten state is available. Furthermore, the desired rock wool can be produced by adopting, in addition to the above-described conditions, a briquetting machine providing good productivity as a granulator of municipal refuse incinerated ash, charging a mixture of the granulated ash and an adjusting raw material in a cupola, fusing the resulting raw material mixture under heat while burning coke, and fiberizing the resulting molten by the centrifugal power of rotation of spinner wheels.

### Brief Description of the Drawing

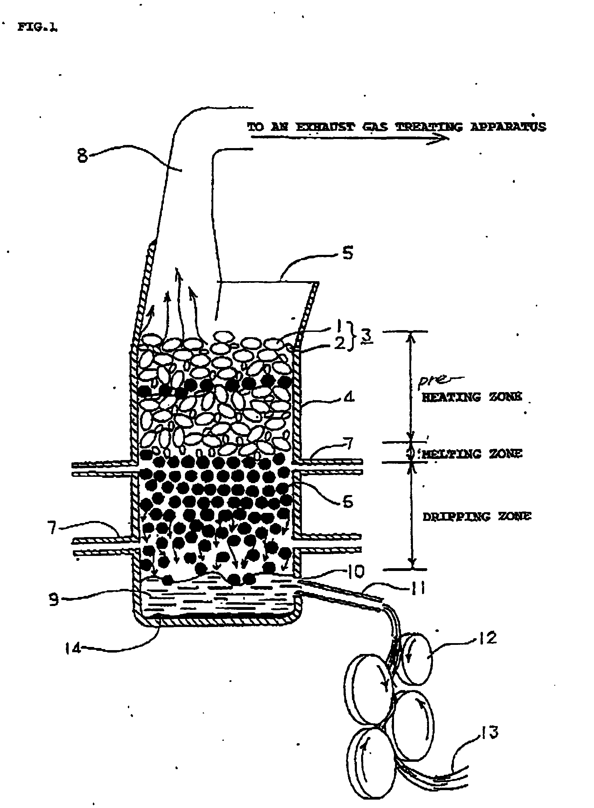

Fig. 1 is a schematic cross-sectional view illustrating the production of rock wool of the present invention.

### Best Mode for Carrying Out the Invention

The preferred embodiments of the present invention will hereinafter be described based on the accompanying drawing.

FIG. 1 is a schematic cross-sectional view illustrating production of rook wool according to one embodiment of the present invention by charging, into a cupola, a raw material mixture of granulated municipal refuse incinerated ash (briquette) which has been dried after granulation with an adjusting raw material and fiberizing the molten on spinner wheels.

In the drawing, a raw material mixture 3 of a briquette 1, that is, granulated municipal refuse incinerated ash with an adjusting raw material 2 is transported from a batch can (not illustrated) which is a raw material feeder and is charged from the inlet 5 of a cupola 4. Massive coke 6 deposited in the cupola 4 with the raw materials burns, by the air or oxygen-rich air blown from tuyeres 7. A high-temperature combustion gas thus passes through between the gaps of the massive bed coke 6 in the cupola 4, ascends between the gaps of the raw material mixture 3 thereabove, passes through an exhaust duct 8 and finally reaches an exhaust gas treating apparatus (not illustrated). The raw material mixture 3 charged from the inlet 5 of the cupola 4 is first deposited in an upper heating zone in the cupola 4, at which the raw material mixture 3 is heated by the combustion gas ascending as described above and then drops gradually in the heating zone until the initiation of melting. In the melting zone beneath the heating zone, the raw material mixture 3 is molten. The molten 3 then drops as a droplet, passing through the gap between the burning bed coke 6 in the dripping zone wherein bed. coke 6 has been deposited, and becomes a high-temperature molten state by the combustion-air ascending upwardly. The raw material mixture 3 molten by passing through a series of the above-described heating zone, melting zone and dripping zone reaches a reservoir 9 as high-temperature molten mixture having the maximum temperature of about 1500°C. The molten passes through a tap hole 10 and then a fireproofed trough 11 and reaches spinner wheels 12, at which it is fiberized, whereby loose rock wool 13 is produced. The loose rock wool 13 is formed into a board product, a flexible rolled product or granular wool by a proper forming apparatus (not illustrated) directly connected with the spinner 12. The molten sub-product 14 of various metals mainly mixed in the municipal refuse incinerated ash is deposited at the most bottom portion of the reservoir 9 so that it is discharged out of the furnace at a proper time.

The adjusting raw material 2 to be charged together with the briquette 1 as the raw material mixture 3 is added in order to attain good molten state and fiber state and at the same time, to adjust the chemical composition of the mixture so that the resulting rock wool has preferable properties. It is supplementary to the municipal refuse incinerated ash serving as a main raw material and examples include blast furnace slag, limestone, silica stone and shot waste.

In consideration of the effective use of municipal refuse incinerated ash, it is desired to increase the adding ratio of the incinerated ash as much as possible. As a result of extensive investigation on the melt properties, fiberizing efficiency and various physical properties of the produced rock wool 13 by changing the using ratio of the briquette 1 to adjusting raw material 2, the present inventors proved that rock wool prepared by adding the briquette 1 to the adjusting raw material 2 in an amount of 50 to 90 wt.% has substantially the same performance as that produced by the conventional process by using blast furnace slag as a main raw material, though the former one being a little darkly colored and usable sufficiently as various reinforcing materials such as thermal insulating material and sound absorbing material.

Municipal refuse incinerated ash usually has a low bulk density within a range of about 0.5 to 1.0 and is composed mainly of about 30 to 50 wt.% of SiO₂, about 10 to 25 wt.% of Al₂O₃ and 25 to 50 wt.% in total of CaO and MgO. In the present invention, such municipal refuse incinerated ash can be used, but not limited thereto.

Although the chemical composition of the fiberized rock wool is available by the addition of the briquette 1 in an amount of 50 to 90 wt.% changes, depending on the chemical composition of the municipal refuse incinerated ash employed and the kind and using amount of the adjusting raw material, it is composed of 24.0 to 35.0 wt.% of CaO, 38.0 to 46.0 wt.% of SiO₂, 14.0 to 22.0 wt.% of Al₂O₃, 0 to 5.0 wt.% of MgO, 1.0 to 7.0 wt.% of Fe₂O₃ and 0 to 5.0 wt.% of R₂O (R stands for an alkali metal). As described later in Table 1, compared with the conventional rock wool produced using blast furnace slag as a main raw material, the contents of CaO and MgO in the rock wool of the present invention are markedly small, while the contents of SiO₂, Al₂O₃ and R₂O are large and the content of Fe₂O₃ is extraordinarily large. The large contents of SiO₂ and Al₂O₃ and small contents of CaO and MgO reinforce the network of the glass-state, thereby improving the strength or durability of the resulting fibers, but they disturb melting. Fe₂O₃ has the same action with CaO, for example, increases fusability so that a practically usable rock wool is available insofar as the chemical composition of the rock wool containing 50 to 90 wt.% of the granulated municipal refuse incinerated ash falls within the above-described range. After cooling, the molten mixture composed mainly of municipal refuse incinerated ash assumes a black or blackish brown color, influenced by the high content of Fe₂O₃. The rock wool or loose wool after fiberization is slightly colored relative to white color of the conventional one composed mainly of the molten slag.

Upon production of the rock wool having the above-described chemical composition from the municipal refuse incinerated ash, the municipal refuse incinerated ash is preferably adjusted, for example, by using silica stone when it contains SiO₂ in a markedly small amount and by using limestone when it contains CaO in a markedly small amount. For adjusting the composition, it is preferred in practice to charge the adjusting raw material in a cupola when a briquette produced from municipal refuse incinerated ash is charged therein.

As a melting furnace for granulated municipal refuse incinerated ash upon rock wool production, use of a cupola is preferred. Use of it makes it possible to efficiently melt the briquette 1, which is dropping in the cupola 1 while being molten, from its surface, brought into a dynamic contact with the high-temperature combustion gas steeply ascending between the gap of the briquettes 1 by the combustion of bed coke 6, deliver the heat efficiently in the liquid combustion system below the cupola 4, and efficiently and strongly melt the raw material such as municipal refuse incinerated ash to be colored deeply. Although there exists no problem in the rock wool production by using an electric furnace for melting granulated municipal refuse incinerated ash, the use of a cupola is preferred because the use of an electric furnace causes higher energy cost and smaller fusing capacity as compared with the use of a cupola. For reference, the energy cost for melting the processed municipal refuse incinerated ash is about 15,000 yen/ton in an electric furnace, while 2000 yen/ton in a cupola.

The briquette 1 has preferably an average diameter of 20 to 50 mm, which provides an efficient molten state. At an average diameter lees than the above-described range, blowing up or scattering of powders from the briquette 1 occurs at an earlier stage before or after the melting by the combustion gas, leading to disturbances therewith of the ascending passage of a combustion gas for melting. The average diameter exceeding the above-described range, on the other hand, is accompanied with the problems that the briquette 1 tends to be broken easily, it takes time to complete melting in a cupola, it takes too much time for drying upon production of the briquette 1 and delay occurs in homogenization of the molten mixture due to insufficient mixing of the briquette 1 with the adjusting raw material 2.

The granulated municipal refuse incinerated ash to be charged in a melting furnace may be in the massive form, but may be in the spherical form, amorphous spherical form, oval spherical form, flat oval steric form or briquette form. The average diameter of the briquette which is not in the spherical form is available by converting plural briquettes into spheres having the same volume, finding their diameters and taking an average of them.

Briquetting is preferably conducted under high compression or under high-temperature high compression. Upon briquetting, a binder agent can be employed. Examples of the binder agent include, but not limited to, molasses, cement, water glass and bentonite. If the briquette has not enough hardness, the broken briquette is blown up in the cupola or clogging therewith occurs at the lower part of the cupola.

The municipal refuse incinerated ash is granulated by one of rolling granulation, extrusion granulation, compression extrusion and fluidized-bed granulation. Among them, compression granulation is preferred, of which that using a briquetting machine of a roll pressing system is particularly preferred, because it permits mass-production of a granulated product of even a large size, production of the granulated product having large specific gravity, and the granulation of powder having relatively low water content. Such a granulator capable of continuous mass production and has high economical efficiency is most suited for municipal refuse incinerated ash.

A known process for obtaining a raw material by converting municipal refuse incinerated ash into molten slag needs 1,000 millions of yen for equipment investment in an industrial scale and 30,000 to 70,000 yen/ton as the production cost, while the above-described process for obtaining a raw material for rock wool from municipal refuse incinerated ash by using the above-described granulator needs about 100 million yen for investment in a granulator and 3,000 to 10,000 yen ton as the production cost. The granulation of municipal refuse incinerated ash requires only the one-tenth or less equipment investment and production cost of the former process, suggesting that the thus-obtained raw material is advisable and low-cost.

Municipal refuse incinerated ash in the above-described briquetting machine is granulated under the conditions of some water content and the kind and amount of the binder agent to be added. Preferred examples of the binder agent include molasses and cement. Water glass, pulp waste, bentonite, softener, caustic soda or the like can also be used. When a briquetting machine is used, it is necessary to consider the rotational frequency and compressive force upon granulation.

### Examples 1 to 5 and Comparative Example

In order to confirm the performance of the rock wool of the present invention obtained using granulated municipal refuse incinerated ash (briquette) as a main raw material, rook wool raw cotton was obtained by granulating municipal refuse incinerated ash in a briquetting machine, drying the granulated product and then charging each of the two kinds of granulated mixture and molten slag at varied ratios in a cupola under operation. The chemical composition of the resulting rock wool, mechanical properties of the monofilament and the bonded-rock wool have been compared with those of the conventional rock wool raw cotton produced using blast furnace slag as a main raw material. The results are shown in Table 1.

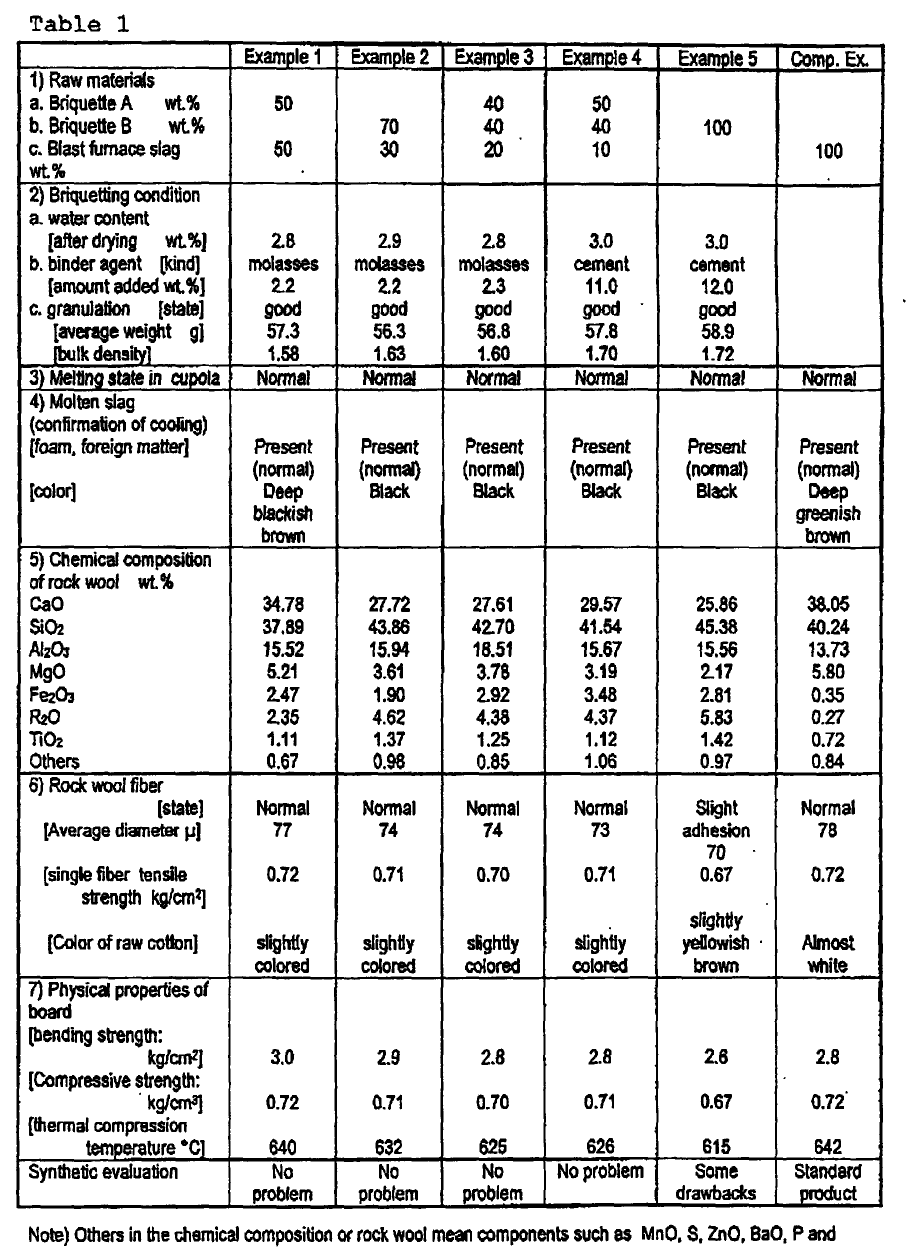

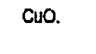

### Test conditions and check items in Table 1 are as follows:

1. The chemical composition of each of two briquettes (A,B) made from municipal refuse incinerated ash and blast furnace slag, each to be used as a raw material, and a ratio (weight ratio) of it are shown in Table 2.

**Table 2**

| Component | Briquette A | Briquette B | Blast furnace slag (for comparison) |
|---|---|---|---|
| CaO | 26.31 | 21.01 | 38.0 to 44.0 |
| SiO₂ | 41.45 | 48.03 | 33.0 to 41.0 |
| Al₂O₃ | 17.32 | 16.72 | 13.0 to 15.0 |
| MgO | 3.84 | 2.39 | 6.0 to 7.0 |
| Fe₂O₃ | 4.52 | 2.66 | 0.2 to 0.4 |
| R₂O | 4.26 | 6.38 | 0.2 to 0.6 |
| TiO₂ | 1.09 | 1.46 | 0.7 to 2.0 |
| S | 0.27 | 0.13 | 0.6 to 1.1 |
| Chlorine | 0.10 | 0.12 | No value |
| Other components | 0.84 | 1.10 | 0.5 to 0.9 |

(Other components are trace components such as MnO, BaO, SrO, P and ZnO)
2. Briquetting of municipal refuse incinerated ash
- Water content: before drying: 10.3 to 12.5 wt.%
after drying: 2.8 to 3.0 wt.%
- Amount of binder added:: molasses (2.2 to 2.3 wt.%)
cement (11.0 to 12.0 wt.%)
- Pressure of granulator:: 5 tons/cm³

3. Using ratio of test raw material and test amount
Using ratio: varied within a range of 30 to 100 wt.%
Test amount: 10 to 15 tons/test

4. Items to be checked
- Melting state and dust scattering condition in a cupola
- Quality of the molten (colored condition, foam impurities contained, kind of foreign matters)
- Fiberizing condition (temperature of the molten withdrawn and stability of the flow rate, amount of non-fiberized shot)
- Rock wool (chemical composition, fiber diameter, monofilament's tensile strength)
- Bonded rock wool (bending strength, compressive strength, heat shrinkage temperature)

Test conditions and test results concerning Table 1 are as follows.

### Test conditions:

In Examples 1 to 5, blast furnace slag selected as an adjusting raw material, briquettes A and B used at some varied mixing ratios and coke as the fuel were charged in a cupola (the capacity of melting ratio was 5 tons per an hour). About 30 minutes after the briquettes were charged, a dark blackish brown molten mixture started to flow out, suggesting that the raw material passed through the cupola within about 30 minutes and was replaced by another raw material.

### Test results:

Compared with the conventional rock wool using blast furnace slag as a main raw material, that obtained in each of Examples 1 to 4 involves no problem in production procedure or state of product such as molten state in the cupola, quality of the molten mixture, fiberized state and product quality of the rock wool and the bonded rock wool, leading to a conclusion that it can be advisable. The rock wool obtained in Example 5 by charging the briquette B in an amount of 100 wt.%, on the other hand, is found that it is accompanied with the drawbacks that in the fiberized state, slight adhesion of a molten mixture occurs, the rock wool assumes a slightly yellowish brown color compared with the other examples, it is inferior in the monofilament's tensile strength, bending strength of the board, compressive strength and heat shrinkage temperature. Accordingly, the using ratio of municipal refuse incinerated ash briquette as a raw material is preferably 50 wt.% to 90 wt.%.

In Table 1, tensile strength of the monofilament of rock wool was measured based on JIS R7601 (1986). As a thermal insulating board, raw cotton to which about 2 wt.% of a phenolic resin was applied upon fiberizing was molded and solidified by drying into a board having density of 80 kg/cm³ and thickness of 50 mm and used as a sample for the measurement of strength. The bending strength, compressive strength and hot shrinkage temperature of the board were measured in accordance with JIS A9504 (1995).

### Industrial Applicability

As described above, the present invention makes it possible to overcome the difficulty in the conventional process wherein municipal refuse incinerated ash was used in the powdery form by granulating the incinerated ash powder into a solid raw material, thus recycling it as a source. Different from the already-known process for producing a molten slag from incinerated ash powder, the invention process makes it possible to provide granulated massive municipal refuse incinerated ash easily at a low cost in a granulator, thereby mass-producing rock wool having equivalent quality to the conventional product by using the ash as a raw material.

Rock wool can be produced by mixing municipal refuse incinerated ash, which has been granulated in a granulator as a solid raw material, with an adjusting raw material, charging the resulting mixture in a cupola, and fiberizing the molten mixture, which has been obtained by the combustion of coke, on spinner wheels.

## Claims

1. Rock wool obtained by melting a granulated raw material of municipal refuse incinerated ash with an adjusting raw material and fiberizing the resulting molten mixture.

2. Rock wool according to claim 1, wherein the granulated raw material of municipal refuse incinerated ash is used in an amount of 50 to 90 wt.%.

3. Rock wool according to claim 1 or 2, wherein melting of the granulated raw material of municipal refuse incinerated ash is carried out in a cupola.

4. Rock wool according to claim 3, wherein the granulated raw material of municipal refuse incinerated ash has an average diameter of 20 to 50 mm.

5. Rock wool according to claim 3 or 4, wherein municipal refuse incinerated ash is granulated in a briquetting machine.

6. A process for producing rock wool, which comprises charging a mixture of a granulated raw material of municipal refuse incinerated ash with adjusting raw materials in a cupola, melting the mixture and fiberizing the molten mixture on spinner wheels.
